# EUROPEAN PATENT SPECIFICATION

(11) **EP 0 327 290 B1**
(45) Date of publication and mention of the grant of the patent: **10.08.1994**
(21) Application number: 89300889.6
(22) Date of filing: 30.01.1989
(51) Int. Cl.: C09D 9/00

(54) **Cleaning compositions**
Reinigende Zusammensetzung
Composition de nettoyage

(30) Priority: 01.02.1988 GB 8802141
(43) Date of publication of application: 09.08.1989
(73) Proprietor: SERICOL LIMITED, Broadstairs, Kent CT10 2PA (GB)
(72) Inventor: Day, Peter Michael, Broadstairs Kent (GB); Brooker, Leonard Roy, Broadstairs Kent (GB)
(74) Representative: Claisse, John Anthony, Dr.

(56) References cited:
- EP-A- 81 355
- EP-A- 0 105 743
- WO-A-86/03766
- US-A- 3 705 857

## Description

This invention concerns cleaning compositions, and in particular such compositions for removing residual ink and/or stencil material from the mesh of a used stencil screen.

Screen printing consists of the image-wise application of an ink on a substrate using a stencil formed on a screen. The nature of the ink is dependant upon the type of substrate on which the printing is to be effected, and upon the final use to be made of the printed substrate.

The broad spectrum of uses for screen printing means that a wide variety of resin types is to be found in screen printing inks, and consequently many different solvents are used in them. The dried inks are frequently designed to be very resistant to materials commonly found in the home and at work, for example grease, acids, alkalis, alcohols, white spirit, furniture polish or boiling water.

Because of the diverse nature of the inks and the variety of solvents contained in them, stencils too need to be highly resistant to degradation, especially as they are often required to produce in excess of 10,000 prints. The same qualities which make stencils resistant to inks and their solvents can make the inks extremely difficult to remove from the screen after

printing. The mesh of the screen is often made of woven fibres of a polyester, nylon or stainless steel, and at the end of a print run it is common practice within the printing industry to clean the mesh of both ink and stencil material to permit reuse of the mesh. Screen ink manufacturers commonly supply cleaning solvents for the removal of wet or freshly dried ink from the screen without causing damage to the stencil, thereby allowing the screen to be stored for reuse.

Removal of the stencil from the mesh for reuse of the mesh requires a further treatment, commonly involving the use of an oxidising agent, for example sodium metaperiodate. The oxidising agent acts by degrading the polyvinyl alcohol in the stencil material. However, even after the use of a cleaning agent and sodium metaperiodate, residual ink is often still present, staining the mesh fibres. Reuse of the mesh can lead to the formation of a "ghost" of the former image on subsequent prints due to modification of the dimensions of the mesh by the ink residues. Removal of the old stencil material with sodium metaperiodate can also be incomplete, and residual stencil material in the mesh can result in partial blockage of the mesh leading to reduced ink flow in subsequent prints and "ghost images".

A further complication can be caused by the presence in the mesh of diazo resin sensitiser frequently used to photosensitise the stencil. This diazo sensitiser often heavily stains the mesh where the mesh has been covered by stencil material, and these stains are not removed either by sodium metaperiodate or by cleaning solvents recommended by ink manufacturers. Such stains can cause "ghost images" in subsequent prints when the mesh is reused. A considerable problem can result if diazo staining builds up from repeated reuse of the mesh.

Rather drastic measures are currently taken when ink and stencil residues, sometimes called "hazes", are left on the mesh. These involve the use of potentially hazardous chemicals, some involving the use of highly caustic substances and others strong bleach. Those which are often found to be the most effective combine caustic chemicals with strong solvents.

More recently, it has been proposed to use less potentially hazardous cleaning compositions, for example combinations of N-methyl-2-pyrrolidone with oxygenated organic solvents (World Patent Specification WO86/03766) or with surfactants (European Patent Specification 0081355). Although these compositions are believed to be less hazardous than those containing caustic chemicals, they require considerably longer dwell times on the screen, and they are not so effective at removing "hazes". In addition, unless used in a soaking bath they tend to be inefficient and wasteful since very little of these compositions tends to adhere to the sceen due to their low viscosity. The result is that the majority of such compositions tend to run off the screen down the drain. A compromise also has to be made with the degree of cleaning action that can be obtained in order to prevent softening of the adhesive holding the mesh to the screen frame. Furthermore, the subsequent spraying of water onto screens soaked in such cleaning compositions to wash them off has the effect of insolublising the ink residues and redepositing them on the mesh.

According to the present invention there is provided a cleaning composition for removing residual ink and stencil material from a screen printing mesh, the composition comprising from 10 to 70 percent by weight of a powder dispersed in an active solvent, the powder having a particle size of not more than 50 microns and comprising a clay, a starch, talc, coconut shell flour, olive stone flour, calcium carbonate, diatomaceous earth, silica, magnesium silicate or aluminum silicate, the active solvent comprising N-methyl-2-pyrrolidone, N-ethyl-2-pyrrolidone, N-(2-hydroxyethyl)-2-pyrrolidone, dimethyl formamide, -butyrolactone, 2-amino-2-methylpropan-1-ol or a glycol ether acetate of formula 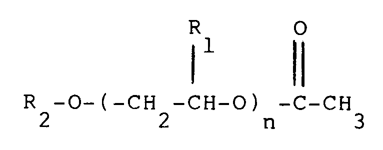
where n=1, 2 or 3, R₁ is hydrogen or methyl,and R₂ is methyl, ethyl, propyl or butyl, or isomers thereof, and the composition having a viscosity of at least 40 poise at 21°C as measured by Brookfield RVTD Viscometer spindle 4 at 20 r.p.m..

Compositions of the present invention have been used to remove ink and stencil "hazes" which remain on the mesh after hitherto recommended solvent cleaning and sodium metaperiodate removal of the stencil material. Furthermore, they do not require the use of highly caustic chemicals present in hitherto proposed "haze" cleaners. The viscosity of the compositions of the present invention can also enable the compositions to be applied locally to areas of the mesh that need cleaning, thereby avoiding softening of the adhesive holding the mesh to the screen frame.

The amount of dispersed powder in the compositions is preferably from 30 to 50 percent by weight of the composition.

The powder used should not be abrasive, it not being the intention to clean the mesh by this means. Indeed, abrasive powders would be a disadvantage since frequent use of the compositions on a particular mesh would physically damage the mesh which would cause ghost images itself and possibly lead to the mesh becoming torn prematurely in use. Some hitherto proposed strongly caustic cleaning compositions do contain low levels of abrasive powders.

Powder particles of relatively small size provide a large specific surface area for the deposition of dispersed ink resin once it has been softened and emulsified by the active solvent. Particularly effective cleaning has therefore been achieved using powder of fine particle size, for example with a particle size of 10 microns diameter or less. However, effective cleaning has also been achieved with powders having a particle size of up to 50 microns diameter. However, the particles should not be so large that they block the apertures of the mesh when the cleaning compositions are being washed off.

Dissolved ink resins insoluble in water or in combinations of the active solvent with water have been found to deposit preferentially on the dispersed powder in the compositions of the invention due to the significantly greater surface area of the powder compared with that of the mesh.

The active solvent should be soluble in water and soften, emulsify or dissolve the ink and stencil materials, and it is preferred if this is effective for a large variety of commonly available inks and stencil materials used in screen printing. The active solvent preferably has a sufficiently low volatility to allow the composition to remain on the mesh for considerable periods of time while still remaining active. In general it is desirable that the compositions remain in paste form for at least 15 minutes. If desired, one or more active solvents can be used.

The amount of active solvent present is preferably from 20 to 95 percent by weight of the composition, and more preferably from 40 to 70 percent by weight of the composition.

Storage of compositions of the present invention can be improved by the incorporation of a thickener, for example to reduce sedimentation of the dispersed powder, or to facilitate application of the compositions to required areas of the screen without uncontrolled spreading, for example into the adhesive bonding the mesh to the frame which would weaken that bond. The thickener should either be soluble in the active solvent or solvents and water, thereby enabling easy removal of the cleaner from the screen without insolubilising the thickener leading to blocking of the screen, or be insoluble and inorganic in nature, it being of a sufficiently fine particle size not to block the mesh. Examples of thickeners which can be used include cellulose ethers, fumed silica, partially hydrolised polyvinyl acetate, polyacrylic acid salts or magnesium oxide.

In addition to the active solvent, compositions of the present invention can include at least one further solvent as a diluent. The diluent solvent should mix homogeneously with the composition and be miscible at least to a large extent with a combination of the active solvent and water. Examples of diluent solvents which can be used include di-, tri-, or tetra-ethylene glycol, mono- or di-ether of diethylene glycol, liquid propylene or polypropylene glycol, butyl glycol, butyl carbitol, glycerol, dimethylethers of polyethylene glycol, triethanolamine, vegetable oils, alphatic or aromatic hydrocarbons, (e.g. toluene or xylene) or tetrahydrofuran.

Due to the generally emulsifying nature of compositions of the present invention, it is usually unnecessary for the diluent solvent to be soluble in water.

The compositions are preferably applied to a screen to be cleaned by brushing, coating trough, squeegee or other means so as to coat evenly both sides of the dry, dirty screen. They are preferably allowed to dwell on the screen for sufficient time to soften, emulsify or dissolve the residual ink and/or screen material, this usually being from 15 minutes to 1 hour. Ink and stencil residues can then be removed by rinsing off with a strong water spray. The presence of the powder in the compositions of the present invention considerably improves removal of the ink and stencil residues which are softened or emulsified by the cleaning compositions of the present invention. Emulsified residues also appear to be preferentially deposited on the surface of the powder which serves to prevent re-deposition on the mesh when the compositions are being rinsed off with water.

The following Examples are given by way of illustration only.

### Example 1

Screen printing stencils were prepared using a commercially available direct diazo sensitised photostencil emulsion (Dirasol 22 supplied by Sericol UK Limited). Two coats of the emulsion were applied to the outside or print side of a polyester mesh (Saatilene 120 HD) mounted on a screen printing frame, plus a further two coats to the squegee side. The screens were then exposed for 2 minutes through a test positive to a 3 kW metal halide lamp at a distance of 1.2 metres, after which they were developed in cold water to remove unexposed areas of emulsion, and they were then dried.

Printing was then effected with these stencils using a variety of black inks available from Sericol Group Limited, 24 Parsons Green Lane, London SW6 4HT. The inks used, and the base resin types, were as follows:-
- Tristar GT: - ethyl cellulose
- Colorstar S: - nitro cellulose
- Colorjet CO: - rosin phenolic
- Matt Vinyl MV: - vinyl resin

After printing, the screens were washed with a commercially available solvent based stencil screen cleaner (Seriwash - sold by Sericol Group Limited). The stencil material was then removed from the mesh using a 2% solution of sodium metaperiodate. Ink staining and stencil debris were apparent as a "haze" on the mesh.

A composition in accordance with the invention was then prepared by dispersing 50g of china clay of 2 microns particle size (Supreme grade - English China Clays Sales Co. Ltd.) in 100g of N-methyl-2-pyrrolidone thickened with 0.75g of Methocel 311 (a grade of hydroxypropyl methyl cellulose ether - Dow Chemical Co. Ltd.)

This composition was then applied by brush to both sides of these dried screens, and it was allowed to remain on the screens for 15 minutes. The composition was thereafter removed using a strong water jet to reveal a clean mesh. The mesh was assessed visually by comparing cleaned areas of the mesh with uncleaned areas. In excess of 95% of the original "haze" had been removed rendering the screen suitable for reuse.

### Example 2

100g of N-methyl-2-pyrrolidone was thickened with 0.75g of Methocel 311 (Dow Chemical Co. Ltd.) and the ability of this composition to clean a used stencil was assessed as in Example 1. Not more than 30% of the "haze" was moved, and the screen could not be satisfactorilly reused.

### Example 3

120g of powdered rice starch (4-8 microns diameter) were dispersed in a mixture of 100g of N-methyl-2-pyrrolidone with 100g of Dowanol DPM (dipropylene glycol monomethyl ether - Dow Chemical Co.Ltd.) as a diluent solvent. The mixture was then thickened with 0.75g of Methocel 311.

The cleaning ability of this composition was assessed as in Example 1. In excess of 90% of the "haze" had been removed rendering the screen suitable for reuse.

### Example 4

120g of calcium carbonate (Snocal grade, <10 microns particle diameter, supplied by Cement Marketing Co. Ltd.) were dispersed in a mixture of 160g of γ-butyrolactone thickened with 0.75g of Methocel 311.

The cleaning ability of the mixture was assessed as in Example 1. In excess of 95% of the "haze" had been removed rendering the screen suitable for reuse.

### Example 5

160g of γ-butyrolactone was thickened with 0.75g of Methocel 311 and the cleaning ability of the mixture was assessed as in Example 1. Not more than 30% of the initial "haze" had been removed from the stencil, and it was unsuitable for reuse.

### Example 6

To illustrate the effect of diluent solvents and surfactants, a paste was prepared by mixing the following ingredients:-

| | |
|---|---|
| Isopar L (isoparaffin - Esso Chemicals Ltd.) | 23.7g |
| Dowanol DPM (Dow Chemical Co. Ltd.) | 15.8g |
| Dowanol PMA (proplyene glycol monomethyl ether acetate - Dow Chemical Co. Ltd.) | 39.8g |
| γ-butyrolactone | 15.0g |
| Synperonic NP9 (nonyl phenol ethoxylate - ICI Ltd.) | 5.7g |
| China Clay - Supreme grade | 51.7g |

The cleaning ability of the resultant paste was assessed as in Example 1. 70% of the initial "haze" had been removed rendering the screen suitable for reuse.

### Example 7

A solution of the following was prepared:-

| | |
|---|---|
| Isopar L (Esso Chemicals Ltd.) | 23.7g |
| Dowanol DPM (Dow Chemical Co. Ltd.) | 15.8g |
| Dowanol PMA (Dow Chemical Co. Ltd.) | 39.8g |
| γ-butyrolactone | 15.0g |
| Synperonic NP9 (ICI Ltd.) | 5.7g |

The cleaning ability of this solution was tested as in Example 1. Not more than 30% of the initial "haze" had been removed, rendering the screen unsuitable for reuse.

### Example 8

A free flowing powder was prepared from the following ingredients:-

| | |
|---|---|
| N-methyl-2-pyrrolidone | 15g |
| China Clay - Supreme Grade | 85g |

When used to remove "haze" as in Example 1, the powder flowed through the mesh apertures of the screen without reducing the "haze".

## Claims

1. A cleaning composition for removing residual ink and stencil material from a screen printing mesh, the composition comprising from 10 to 70 percent by weight of a powder dispersed in an active solvent, the powder having a particle size of not more than 50 microns and comprising a clay, a starch, talc, coconut shell flour, olive stone flour, calcium carbonate, diatomaceous earth, silica, magnesium silicate or aluminum silicate, the active solvent comprising N-methyl-2-pyrrolidone, N-ethyl-2-pyrrolidone, N-(2-hydroxyethyl)-2-pyrrolidone, dimethyl formamide, γ-butyrolactone, 2-amino-2-methylpropan-1-ol or a glycol ether acetate of formula 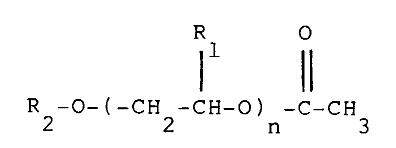 where n=1, 2 or 3, R₁ is hydrogen or methyl,and R₂ is methyl, ethyl, propyl or butyl, or isomers thereof, and the composition having a viscosity of at least 40 poise at 21°C as measured by Brookfield RVTD Viscometer spindle 4 at 20 r.p.m.

2. A composition according to claim 1, containing from 30 to 50 percent by weight of the powder.

3. A composition according to either of the preceding claims, containing from 20 to 95 percent by weight of active solvent.

4. A composition according to claim 3, containing from 40 to 70 percent by weight of active solvent.

5. A composition according to any of the preceding claims, wherein the composition has a viscosity of from 70 to 170 poise at 21°C as measured by Brookfield RVTD Viscometer spindle 4 at 20 r.p.m.

6. A composition according to any of the preceding claims including a thickener.

7. A composition according to claim 6, wherein the thickener comprises a cellulose ether, fumed silica, partially hydrolised polyvinyl acetate, polyacrylic acid salts or magnesium oxide.

8. A composition according to any of the preceding claims, including one or more diluent solvents.

9. A composition according to claim 8, wherein the diluent solvent comprises a di-, tri-, or tetra-ethylene glycol, a mono- or di-ether of diethylene glycol, a liquid propylene or polypropylene glycol, butyl glycol, a butyl carbitol, a dimethylether of a polyethylene glycol, triethanolamine, a vegetable oil, an aliphatic or aromatic hydrocarbon, (e.g. toluene or xylene) or tetrahydrofuran.

10. A method of cleaning a stencil screen on a stencil mesh, which method comprises treating the screen with a solution of a metaperiodate and thereafter removing residual ink and/or stencil material using a composition according to any of the preceding claims.

## Patentansprüche

1. Reinigungskomposition zur Entfernung von Restfarbe und Schablonenmaterial von einem Siebdruckseib, dadurch gekenzeichnet, dass die Komposition 10 - 70 Gew.% eines Pulvers enthält, das in einem aktiven Lösungsmittel dispergiert ist, wobei das Pulver eine Teilchengrösse von nicht mehr als 50 µm hat, und einen Ton, eine Stärke, Talcum, Kokosnußschalen-mehl, Olivenkern-mehl, Calciumcarbonat, Diatomeenerde, Siliciumdioxid, Magnesiumsilicat oder Aluminiumsilicat umfast, und wobei das aktive Lösungsmittel N-Methyl-2-pyrrolidon, N-(2-Hydroxyethyl)-2-pyrrolidon, Dimethylformamid, γ-Butyrolacton, 2-Amino-2-methylpropan-1-ol oder ein Glykoletheracetat der allgemein Formel: 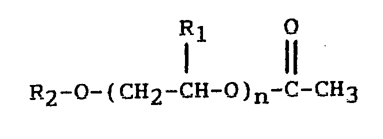 worin
n = 1, 2 oder 3,
R₁ Wasserstoff oder Methyl und
R₂ Methyl, Ethyl, Propyl oder Butyl oder deren Isomeren bedeuten, umfast, und die Komposition eine Viskosität von mindestens 40 Poise bei 21°C, gemessen mit Brookfield RVTD-Viskosimeter Spindel 4 bei 20 U/Min aufweist.

2. Komposition nach Anspruch 1, dardurch gekennzeichnet, dass der Pulver-gehalt 30-50 Gew.% beträgt.

3. Komposition nach irgendeinem der vorhergehenden Ansprüche, dardurch gekennzeichnet, dass der Gehalt an aktivem Lösungsmittel 20 - 95 Gew.% beträgt.

4. Komposition nach Anspruch 3, dardurch gekennzeichnet, dass der Gehalt an aktivem Lösungsmittel 40 - 70 Gew.% beträgt.

5. Komposition nach irgendeinem der vorhergehenden Ansprüche, dadurch gekennzeichnet, dass die Komposition einem Viskosität von 70 - 170 Poise bei 21°C, gemessen mit Brookfield RVTD-Viskosimeter Spindel 4 bei 20 U/Min aufweist.

6. Komposition nach irgendeinem der vorhergehenden Ansprüche, gekennzeichnet durch einem Gehalt an einem Verdickungsmittel.

7. Komposition nach Anspruch 6, dadurch gekennzeichnet, dass sie als Verdikkungsmittel einem Celluloseether, Mikrosiliciumdioxid, partiell hydrolysiertes Polyvinylacetat, Polyacrylsäuresalze oder Magnesiumoxid enthält.

8. Komposition nach irgendeinem der vorhergehenden Ansprüche, dadurch gekennzeichnet, dass sie ein oder mehere Verdünnungs-Lösungsmittel enthält.

9. Komposition nach Anspruch 8, dadurch gekennzeichnet, dass sie als Verdünnungs-Lösungsmittel ein Di-, Tri- oder Tetraethylenglykol, einen Diethylenglykol-mono- oder -diether, ein flüssiges Propylen- oder Polypropylenglykol, Butylglykol, ein Butylcarbitol, einen Polyethylenglykol-dimethylether, Triethanolamin, ein Pflanzenöl, einen aliphatischen oder aromatischen Kohlenwasserstoff (z.B. Toluol oder Xylol) oder Tetrahydrofuran enthält.

10. Verfahren zur Reinigung einer Schablonenabdeckung auf einem Schablonensieb, dadurch gekennzeichnet, dass die Abdeckung mit einer Lösung eines Metaperjodats behandelt und danach die Restfarbe und/oder das Schablonenmaterial unter Verwendung einer Komposition nach einem der vorhergehenden Ansprüche entfernt wird.

## Revendications

1. Composition de nettoyage pour éliminer les résidus d'encre et de pochoir des mailles d'écrans de sérigraphie, la composition comprenant 10 à 70 % en poids d'une poudre dispersée dans un solvant actif la poudre ayant une taille de particule non supérieure à 50 microns et comprenant une argile, un amidon, du talc, de la farine de coquille de noix de coco, de la farine de noyau d'olive, du carbonate de calcium, de la terre d'infusoires, de la silice, du silicate de magnésium ou du silicate d'aluminium, le solvant actif comprenant la N-méthyl-2-pyrrolidone, la N-éthyl-2-pyrrolidone, la N-(2-hydroxyéthyl)-2-pyrrolidone, le diméthylformamide, la γ-butyrolactone, le 2-amino-2-méthylpropan-1-ol ou un acétate d'éther de glycol de formule 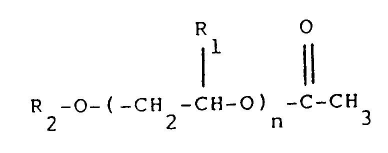 dans laquelle n=1, 2 ou 3, R₁ est un atome d'hydrogène ou un groupe méthyle, et R₂ est un groupe méthyle, éthyle, propyle ou butyle, ou des isomères de ces groupes, et la composition ayant une viscosité d'au moins 40 poises à 21°C, mesurée avec la broche 4 du viscosimètre Brookfield RVTD à 20 t/mn.

2. Composition selon la revendication 1, contenant 30 à 50 % en poids de la poudre.

3. Composition selon l'une quelconque des revendications précédentes, contenant 20 à 95 % en poids de solvant actif.

4. Composition selon la revendication 3, contenant 40 à 70 % en poids de solvant actif.

5. Composition selon l'une quelconque des revendications précédentes, dans laquelle la composition a une viscosité de 70 à 170 poises à 21°C, mesurée avec la broche 4 du viscosimètre Brookfield RVTD à 20 t/mn.

6. Composition selon l'une quelconque des revendications précédentes, comprenant un épaississant.

7. Composition selon la revendication 6, dans laquelle l'épaississant comprend un éther cellulosique, de la silice fumée, du poly(acétate de vinyle) partiellement hydrolysé, des sels de poly(acide acrylique) ou de l'oxyde de magnésium.

8. Composition selon l'une quelconque des revendications précédentes, comprenant un ou plusieurs solvants diluants.

9. Composition selon la revendication 8, dans laquelle le solvant diluant comprend un di-, tri- ou tétraéthylèneglycol, un mono- ou diéther de diéthylèneglycol, un propylène- ou polypropylèneglycol liquide, le butylglycol, un butylcarbitol, un diméthyléther d'un polyéthylèneglycol, la triéthanolamine, une huile végétale, un hydrocarbure aliphatique ou aromatique (par exemple le toluène ou le xylène) ou le tétrahydrofurane.

10. Procédé de nettoyage d'un écran de pochoir sur des mailles de pochoir, consistant à traiter l'écran avec une solution d'un métapériodate et ensuite à éliminer les résidus d'encre et/ou de pochoir en utilisant une composition selon l'une quelconque des revendications précédentes.
